(19)

Europäisches Patentamt
European Patent Office
Office européen des brevets

(11) **EP 2 104 365 A1**

(12) **EUROPEAN PATENT APPLICATION**
published in accordance with Art. 153(4) EPC

(43) Date of publication:
**23.09.2009 Bulletin 2009/39**

(51) Int Cl.:
***H04N 13/00*** *(2006.01)* ***G06T 11/00*** *(2006.01)*

(21) Application number: **07851843.8**

(22) Date of filing: **28.11.2007**

(86) International application number:
**PCT/MX2007/000144**

(87) International publication number:
**WO 2008/066368 (05.06.2008 Gazette 2008/23)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **28.11.2006 US 564263**

(71) Applicant: **Prefixa Vision Systems, S.A. De C.V. Mexico (MX)**

(72) Inventors:
• **ARIAS ESTRADA, Miguel Octavio**
  **C.P. 72760, San Pedro Cholula**
  **Puebla, México (MX)**
• **MORALES REYES, Alicia**
  **C.P. 14390, Delegación Tlalpan**
  **D.F. México (MX)**
• **ROSAS CHOLULA, Maria Luisa**
  **C.P. 72100, Puebla**
  **Puebla, México (MX)**
• **SOSA RAMÍREZ, Gerardo**
  **C.P. 68000, Oaxaca, México (MX)**

(74) Representative: **Hackney, Nigel John et al**
  **Mewburn Ellis LLP**
  **33 Gutter Lane**
  **London**
  **EC2V 8AS (GB)**

(54) **METHOD AND APPARATUS FOR RAPID THREE-DIMENSIONAL RESTORATION**

(57) The present invention comprises a method and an apparatus for three-dimensional modelling using the principle of stereo vision with an integrated lighting system used for restoring depth without prior data on the surface reflection. The method includes several initial steps using stereo and radiometric calibration and processes of rectification with a view to obtaining precise results. In addition, an active stereo technique is applied in order to restore dense depth maps from a simple pair of stereo images. This technique is a combination of conventional approaches and stereo photometry and is based on the reflection reciprocity property which considers an arbitrary surface distribution of the reflection. This particular property is achieved if the object to be restored is acquired in the specific lighting conditions provided by the invention. The active stereo technique is followed by a process of in-depth map calibration. The method also includes a procedure for image acquisition for obtaining the sets of images required for calibration, rectification and three-dimensional restoration processes. The apparatus for stereo acquisition of images comprises internal light sources which are automatically communicated by a lighting control to ensure the reciprocity property, a stereo camera head made up of the optics required for acquiring reciprocal stereo images and a PC compatible interface. Positions of external light sources can be considered as an extension of this apparatus. The method and apparatus can be extended to other cameras or light source configurations for acquiring large objects and/or multiple points for view acquisition. This invention is potentially quicker than other 3-D scanners or 3-D restoration systems since it requires only two images in order to obtain deep models of objects with an arbitrary distribution of surface reflection such that, the system is useful in a wide range of applications such as metrology, quality control and medical and dynamic three-dimensional modelling.

Fig. 1

EP 2 104 365 A1

**Description**

**FIELD OF THE INVENTION**

The subject invention concerns a stereo vision, particularly a method and an apparatus for stereo and radiometric calibration, a three-dimensional stereo technique and a depth map calibration process to obtain dense depth maps without having to know beforehand the surface reflection.

**BACKGROUND OF THE INVENTION**

Stereo vision consists of the restoration of the three-dimensional data of an object seen from two or more points. Some fields of application for stereo vision are industrial, such as for example the quality control in production lines where the concepts of inspection and sampling are required to eliminate defective products. Another important field is in medicine where highly detailed models are required by the specialists. Obtaining dense and detailed three-dimensional models is expensive in terms of computer time and can cause bottlenecks in the production lines.

Stereo vision involves generally several stages. First a calibration process is necessary. This process comprises both stereo and radiometric aspects. After this, a correspondence analysis is applied to the stereo images and finally the three-dimensional model is obtained.

The calibration process consists generally of two stages: stereo and radiometric. The radiometric or geometric calibration stage is resolved by the geometric calibration of each camera independently and then a geometric transformation is applied to find the geometry of the stereo fixation. This geometric calibration yields knowledge about the rotation and position of the camera (commonly called the extrinsic parameters of the camera) and its internal characteristics (intrinsic parameters of the camera) such as focal length, position of the main point, scale differences of the image axes etc.

There are several calibration methods used with commercially available cameras which have been described. One such example is described in TSAI, R. Y., "An Efficient and Accurate Camera Calibration Technique for 3-D Machine Vision, "Proceedings of the IEEE Conference on Computer Vision and Pattern Recognitions (CVPR), Miami Beach, FL, 1986, p 364-374, and also in LENZ, R.K. and TSAI, R. Y., "Techniques for Calibration of the Scale Factor and Image Center for High Accuracy 3-D Machine Vision Metrology", IEEE Transactions in pattern analysis and artificial intelligence, 10(5): 713-720, September of 1988, both incorporated here by reference.

In these articles, Tsai and Lens offer a practical solution for switching off the calibration of the camera support: This solution estimates the relative movement and rotation introducing a radial alignment limitation. Using these estimated values, the parameters of the camera can be derived for optimization. Nevertheless the Tsai model is widely used in computer vision, and produces the poorest results among other also widely used models.

Another popular method is known as "Direct Linear Transformation" (DLT) and is described in ABDEL, AZIS, Y. I. and KARARA, H. M" "Direct linear transformation into object space coordinates in close range photogrammetry"; in Proceedings of the Symposia on Close-Range Photogrammetry, pages 1-18, University of Illinois, Urbana, 1971, incorporated in the present document as reference. A limitation of the DLT model is that it does not pay attention to the distortion of the lenses which can severely affect the accuracy of the measurement.

Another classic calibration technique is known as the standard Haralick solution, and is described in HARALICK, R., and SHAPIRO, L., Computer and Robot Vision, Volume 11. Chapter 13, "Projective Geometry in Perspective," pages 43-124, Addison Wesley, Reading, MA, 1993 and in POELZLEITNER, W. and ULM, M., "Comparative Study of Algorithms with Application to the Navigation of Spaceships",SPIE Proceedings, volume 2350, Videometrics III, Sabry F. Haking Publishers, October 1994, pages 187-196, both incorporated here for reference.

The standard Haralick solution uses an iterative method to find three extrinsic parameters (three angles for the rotation between a world and a pinhole coordinate system) and seven intrinsic parameters (three camera distortion factors, the center of the image, as well as the scale factor and the vertical and horizontal image coordinates). A problem with the standard Haralick solution is that the nonlinear equation does not allow for a direct solution. Thus, the partial differentiation of the nonlinear equation is generally used and the high order of the nonlinear terms is omitted before the iteration is carried out. This is a good approach of the initial parameters that may be available but there is no guarantee that the iteration has a convergent result. A similar nonlinear optimization method is described in BROWN, D.C., "Calibration of close-range cameras", Photogrammetric Engineering, volume 37, no. 8, pages. 855-866, 1971, incorporated here as reference.

Many of the disadvantages of the already discussed methods are aimed at a new way of calibration derived from the Hararick model, known as the Gintic model, and is described in JIAN, X., MALCOLM; A. and ZFIONGPING, F:, Camer Calibration with Micron Level Accuracy, SIMTech Techical Report (AT/01/037/PS) Singapore, 2001, incorporated here by reference. The Gintic model simplifies the equation of the Haralick model and guarantees that the optimal solution always is found, and in this way finds the camera parameters that best describe the behavior of the camera.

The second calibration stage is the radiometric calibration. This step is necessary in order to recover the in-depth information from the objects in the scene considering an unknown surface reflection. The calibration of the luminous anisotropy and the relative orientation of the anisotropy with respect to the camera are carried out entirely after the radiometric calibration. The radiometric calibration is required under the assumption that the photo-response of the camera is not lineally and spatially uniform and the lights are not isotropic. The article JANKO, Z., DRBOHLAV, 0., and SARA, R., "Radiometric Calibration of a Helmholtz Stereo Rig", coming out of the Conference of the Computer Society IEEE 2004 in Computer Vision and Patterns Recognition, June 27 - July 2, 2004, volume 1, pages 166-171, incorporated for reference, illustrates how radiometric calibration improves the accuracy of the recovery of in-depth data.

After the calibration, the second step for the three-dimensional stereo restoration is the correspondence analysis which is commonly classified both as active and as passive depending on the illumination control. The active approach uses the manipulation of scenic lights, for example a photometric stereo illumination, while the passive methods do not depend on scenic lights. The distribution of the surface reflection depends on the light falling on the objects in the scene and the material of the object. Nevertheless, both the active and passive approaches require a prior examination of the surface reflections, both implicitly as explicitly.

The passive stereo approach implicitly assumes surface reflections. That is to say, it assumes that the reflection of the objects in the scene is the same without taking into account the point of vision of the acquisition. On the other hand, active stereo approaches establish a form of known parametric reflection. That is to say, they calculate a function of reflection from different physical models, and later they include this function in the forced recovery. Both considerations are not valid in the real world, since reflection depends on various aspects such as the optical surface properties, angle of incidence of the light, position of the optical points, etc.

Another three-dimensional recovery technique refers to a system in which the scene is illuminated by a geometric pattern of known light. These are known as structured light systems, and they make use of triangulation to compute the depth. The main disadvantage of the structured light methods is that they require several image acquisitions (from between 4 and 32) under different lighting conditions to obtain a dense depth map, making these recovery techniques expensive calculation methods, and they are at this time not practical for requests of fast 3-D acquisition such as inspection in production lines or object modeling.

Recently a new stereo technique has been proposed in MAGDA, S., KRIEGMAN, D., ZICKLER, T., and BELHUMEUR, P., "Beyond Lambert: Reconstructing surfaces with arbitrary BRDFs", Proceedings of the International Conference on Computer Vision (ICCV), 200I, p 391-399, and ZICKLER, T., BELHUMEUR, P., and KRIEGMAN, D., "Helmoholtz stereopsis: Exploiting Reciprocity for Surface Reconstruction", Proceedings of the 7th European Conference on Computer Vision (ECCV), May 2002, volume 3, p 869-884, both incorporated for reference. This new approach is proposed to obtain depth information recovery of scene objects considering a surface with arbitrary or unknown reflectance.

This recent stereo technique takes advantage of the reflecting symmetry of the surface. The reflecting symmetry, or reciprocity, allows an arbitrary form of the reflecting surface. In this way, in an environment of controlled lighting, the restrictions caused by the optical properties inherent in the surface materials are eliminated, and the depth recovery of any class of surface can be obtained.

This stereo technique based on reflection reciprocity has other advantages, for example, since the stereo images have reciprocal irradiance, the reflections appear fixed on the surface, which is an advantage over other stereo approaches because it is possible to match corresponding reflecting regions. On the other hand, semi-occluded regions match each other. That is to say, a semi-occluded region in the left stereo image appears shaded in the right stereo image and vice versa. This property can improve the quality of the depth reconstruction since it allows the determination of the depth discontinuities. In addition, the flat and untextured surfaces cannot be recovered using these active or passive traditional stereo techniques.

A simplification of the multi-ocular stereo argument is presented in ZICKLER, T., HO, J., KRIEGMAN, D., J., and BELHUMEUR, P., "Binocular Helmholtz Stereopsis"; Proceedings of the International Conference on Computer Vision (ICCV), 2003, pages 1411-1417, incorporated here for reference. These articles propose a method as to how a dense depth map can be recovered from a single pair of reciprocal stereo images considering orthographic point projections.

Unfortunately, these articles do not illustrate how such a technique can be integrated easily with the calibration processes. In particular, a mechanical calibration process is assumed in which the cameras are repositioned and detailed measurements are carried out. The article already mentioned also does not illustrate the steps implied in the proposed approach. In addition, the approach by Zickler establishes a stereo analysis considering an orthographic point projection. This type of projection geometry can be obtained if the stereo arrangement is far from the objects of the scene. Therefore, this restriction eliminates the possibility of making it practical for use in industrial operations where space is an important limiting factor.

Therefore, there is a need for a method and an apparatus for the three-dimensional depth recovery using the concept of reflectance reciprocity that does not have the limitations indicated above. In particular, there is a need for a complete system, i.e a practical method and apparatus which encompasses all stages of a highly accurate three-dimensional recovery process, from the calibration of the camera to a final grid adjustment process, including some specific tasks related to the reflectance reciprocity property. Moreover a complete system should satisfy the requirements in real time of applications such as industrial inspections.

## BRIEF DESCRIPTION OF THE INVENTION

The invention provides a method and an apparatus for obtaining stereo images that satisfy the reflectance reciprocity property to recover depth information of an object put in the visual field of an array of a single or multiple stereo cameras array. This particular property of surface reflectance makes it possible to model objects three-dimensionally without considering their distribution of reflection, i.e. the system can manipulate untextured and specular surfaces where traditional and photometric stereo techniques fail. In a preferred embodiment the subject invention uses an extended binocular approach that does not have any restriction related with projection geometry or the configuration of the camera arrangement.

The system uses a stereo and radiometric calibration process before capturing the images of the object. The stereo calibration process requires two stereo pairs of a calibration pattern to model the intrinsic and extrinsic parameters of a single or multiple stereo camera array. The radiometric calibration needs a single stereo pair of reciprocal images of a white target calibration pattern in order to apply a distribution of isotropic light to the stereo images. Finally, a stereo rectification process is applied in order to ensure epipolar contrast and to recover depth information of the object in the scene.

A dense three-dimensional model is obtained according to the invention by stereo and radiometric calibration procedures. After this, a stereo rectification process is applied to ensure epipolar contrast. Subsequently an algorithm for the three-dimensional recovery over complementary epipolar lines is applied in order to collect dense depth data of the object in the scene. Finally a calibration process of the depth map is applied to obtain a highly accurate 3-D points cloud.

The system has a stereo head with an internal illumination control which includes a beam splitter to align the optical axis with the light beam. Alternatively, an exterior illumination distribution may be used consisting of placing the light source near the optical center. The device is designed for an acquisition process which allows the automatic communication of the stereo light sources so as to ensure the reciprocity property of the images.

The system is fully automatic, easy to use, has a simple setup and calibration process. The system is unique in that it requires only two images of the object for a highly accurate three-dimensional modeling of objects without considering their reflectance distribution. It is therefore potentially faster than another 3-D scanners or 3-D recovery systems such that the system can be used in a wide range of applications such as metrology, quality control, medicine, dynamic three-dimensional modeling and the like.

The system of the subject invention simplifies the control of light in order to obtain stereo images with symmetrical intensity curves. Contrary to other photometric stereo techniques, this approach obtains the depth measurements of the object in the scene directly, avoiding the normal field integration translates which means an important saving in computing costs.

Additionally, an embodiment of the image projection device allows a stereo camera configuration with a parallel and convergent optical axis. This option can also be applied to a system of extended multivision cameras.

## BRIEF DESCRIPTION OF THE ILLUSTRATIONS

Figure 1 is a diagram of the general principle of the invention.

Figure 2 is a diagram of the process for obtaining a general image.

Figure 3A is a diagram of the camera head considering an internal light control.

Figure 3B is a diagram of the camera head considering an external light control.

Figure 4 is a diagram of the basic stereo recovery device.

Figure 5 is a general diagram of the 3-D recovery process.

Figure 6 is a diagram of the possible extensions of the device.

Figure 7 is a block diagram of the stereo calibration process.

Figure 8 is a block diagram of stereo rectification process.

Figure 9 is a block diagram of the radiometric calibration process.

Figure 10 is a block diagram of the radiometric rectification process.

Figure 11 is a block diagram of the three-dimensional recovery process considering orthographic projection.

Figure 12 is a block diagram of the three-dimensional recovery process considering perspective projection.

Figure 13A is a diagram of the calibration process of the depth map.

Figure 13B is a diagram of the rectification process of the depth map.

Figure 14 is a diagram of examples of the three-dimensional recovery.

**DETAINED DESCRIPTION**

SYSTEM CONFIGURATION

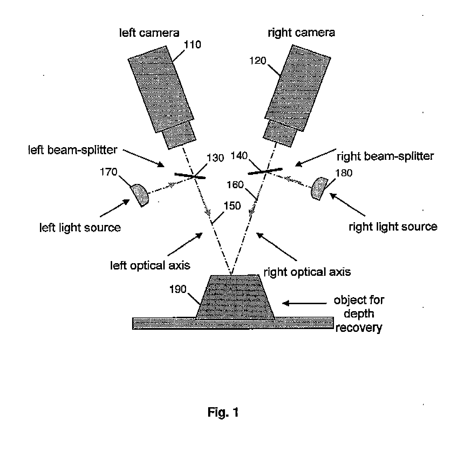

Figure 1 illustrates the general principle of the invention. The left camera 110 and right camera 120 capture images of the object 190. A left light source 170 and a left beam splitter 130 are used so that the object 190 is illuminated along the left optical axis 150 when an image is captured by the right camera 120, and similarly a right light source 180 and a right beam splitter 140 are used to illuminate the object 190 along the right optical axis 160 when an image is captured by the left camera 110.

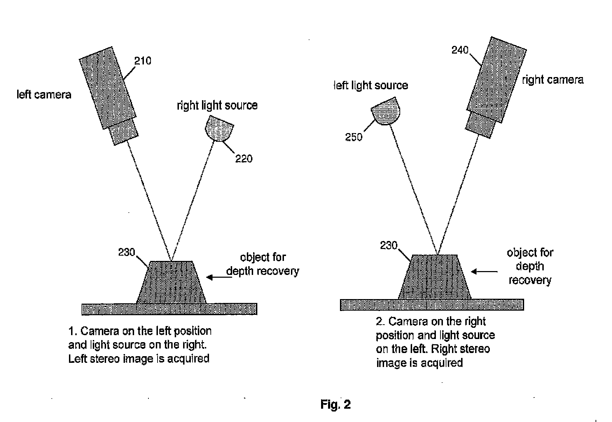

The process of obtaining the image is illustrated in greater detail in Figure 2. The left camera 210 captures an image of the object 230 when it is illuminated by the right light source 220. The left stereo image is obtained in this way. The right camera 240 captures an image of the object 230 when it is illuminated by the left light source 250. The right stereo image is obtained in this way. After both images have been obtained, the subject invention is able to recover depth information as described in detail below.

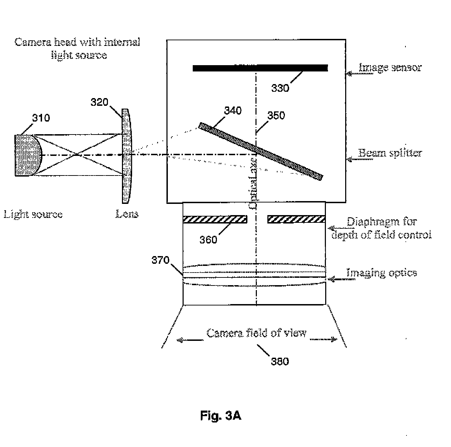

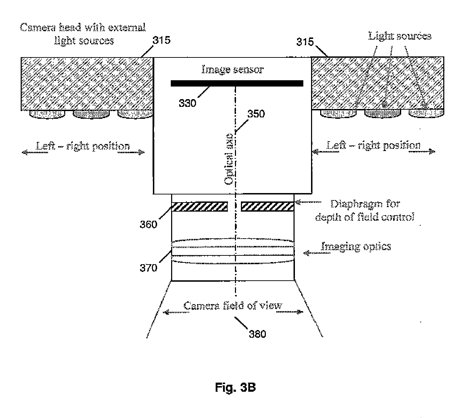

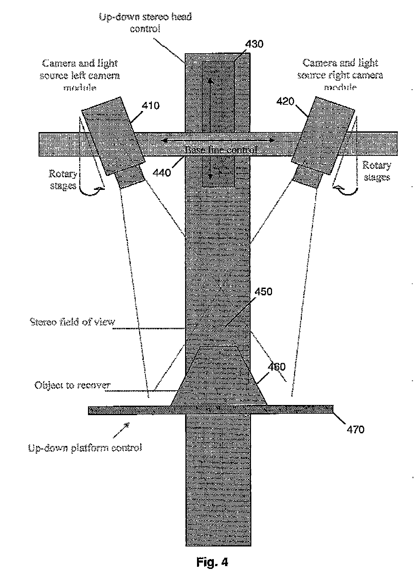

The figures 3A and 3B illustrate in greater detail two alternative cameras and the lighting mechanism, and Figure 4 shows a complete system for calibrating and modeling a three-dimensional object according to the invention.

The system illustrated in Figure 4 includes the camera and light source modules 410 and 420, which can be illuminated internally according to Figure 3A or alternatively illuminated externally according to Figure 3B. The camera and light source modules 410 and 420 also include cameras and a PC-compatible interface. The cameras can be rotated to image the object from multiple points of vision. The rotation allows one to consider various geometries.

The modules of the internal lighting cameras illustrated in Figure 3A include a beam splitter 340 to align the optical axis 350 with the light beam originating from the light source 310 and pass through the lens 320. The image sensor 330 is used to capture an image of the object and includes also diaphragms 360 for depth of field control and the optics of the image projection 370. The object to be imaged and illuminated is placed within the field of vision of the camera 380.

The modules of the external lighting camera illustrated in figure 3B include the light sources 315. As in figure 3B, the image sensor 330 is used to capture an image of the object and along the optical axis 350, through the diaphragm 360 and the imaging optics 370. During the image projection of the object, the stereo light sources are switched automatically in such a way that the symmetrical reciprocity of the irradiance of the image is obtained.

The cameras used in the modules illustrated in Figures 3A and 3B are made up of CMOS digital image sensors and optical lenses. An example of an image sensor that can be used in an embodiment of the invention is the ½ inch Digital Image Sensor of CMOS MT9T001 with 3 Megapixels manufactured by Micron Technology, Inc. The data sheet is attached for reference.

The sensor MT9T001 yields full-screen images in a wide range of formats. The pixel pattern in the sensor CMOS has 2048 columns and 1536 rows. Lenses of 25 mm or 12 mm are used alternatively, depending on the field of vision required to image the object. In one of the embodiments of the subject invention the cameras are capable of obtaining full resolution RBG images at 12 frames per second (fps), and these are connected to a computer via a USB port. In one embodiment said computer has a Pentium III processor with 1 GHz and 512 Mb RAM.

As shown in figure 4, the object 460 to be modeled is placed in an up-down platform 470 within the field of vision 450 of the camera array. The base line control 440 is used to move the camera and light source modules 410 and 420 left and right, and up-down stereo head control 430 is used to move the modules of the cameras and the light sources 410 and 420 up and down.

The concept of the basic system can extended to consider different geometries for spatial point projections. That is to say, orthographic projections and perspective projections, to allow cameras arrays and light sources arranged in various configurations. The orthographic and perspective projections are described in detail below.

FUNCTIONALITY OF THE SYSTEM

Figure 2 shows the general principle of acquisition. This principle makes it possible to acquire a system of images of an object placed within the field of vision of the camera array. In this example, the camera array can be turned within a range of 40 degrees in ten-degree steps, allowing the object to be imaged from 4x4 different points of vision specified by the user. Even though the angular positions of the cameras are repeatable, the calibration process is repeated to obtain accurate results. The position of the camera and the angles depend on the application, and the presented method can be adapted to other multiple configurations of camera positions.

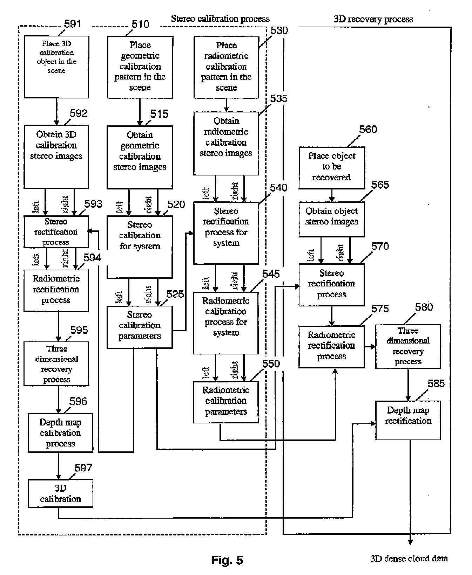

Figure 5 shows the global calibration and the 3-D calibration process. The steps illustrated on the left represent the stereo calibration process and the steps illustrated in the right represent the 3-D recovery process. During the calibration the cameras acquire three sets of images: stereo calibration images, radiometric calibration images and 3-D calibration object images. In the step 510 a geometric calibration pattern is placed in the scene and in step 515 a set of stereo calibration images is obtained.

As explained later on in more detail, step 520 achieves the stereo calibration and step 525 generates the stereo calibration parameters. In step 530 a radiometric calibration pattern is placed in the scene and in step 535 a set of stereo calibration images is obtained. As explained below in detail, step 540 involves the stereo rectification, step 545 involves the radiometric calibration, and in step 550 a set of radiometric calibration parameters is obtained. The final step in the calibration process places a 3-D calibration object in the scene in step 591. A 3-D calibration object is placed in the scene and in step 592 a set of 3-D calibration stereo images is obtained. Step 593 involves the stereo rectification process, step 594 involves the radiometric rectification process, step 595 involves the three-dimensional recovery process and step 596 involves the calibration process of the depth map. Finally, a set of 3-D calibration parameters is obtained in step 597.

The calibration has to be performed only once in a previous process step for a particular array of cameras. Later, an object to be recovered is placed in the scene in step 560 and a set of images is acquired in step 565. As explained in detail below, a stereo rectification process occurs in step 570, followed by the radiometric rectification process in step 575, a three-dimensional recovery process in step 580 and a rectification of the depth map in step 585. The acquisition and processing of the images are automated after the object has been placed in the field of vision of the cameras. Then, the three-dimensional recovery is obtained completely automatically.

The object used for the 3-D calibration images is a calibration object or pattern that has the visually perceivable characteristics painted on it. The set of radiometric calibration images is acquired of a calibration object or pattern with a uniformly distributed gray level. This set of images is acquired while the calibration object is illuminated with automatically commuted stereo light sources.

During the three-dimensional recovery process, the set of images of the object is acquired while the object is illuminated by automatically commuted stereo light sources. This set allows the three-dimensional modeling of objects without considering their distribution of reflectance as described in greater detail below. In one embodiment of the invention, the system of acquired images can be displayed on the monitor while the images are being acquired.

An important difference between the subject invention and the prior art is that the system of the subject invention only uses two images of the object to achieve three-dimensional object modeling without considering the distribution of their reflection. The system takes advantage of the reflectance symmetry of surfaces, i.e. the system can manipulate untextured and specular surfaces.

Another important difference from the prior art is that the system of the subject invention uses internal illumination sources to align the optical axis with the light beam. This allows the automatic commutation of the stereo light source to ensure the reciprocity property of the images.

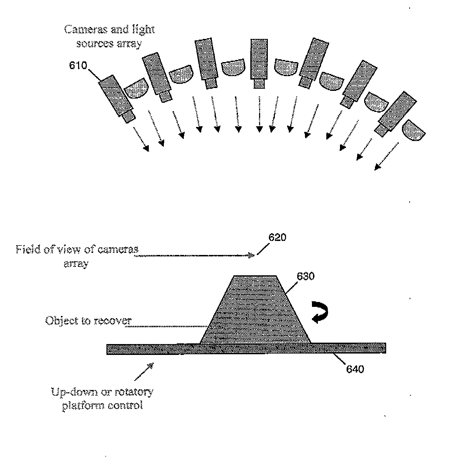

It should be noted that other equivalent systems can be established within the scope of the subject invention. For example, instead of using internal light sources, the lights may be in an external location; the cameras or objects may be turned to acquire full 360-degree 3-D models; the system can be composed by stereo cameras and arrays of light sources 610 arranged in different configurations on up-down or spin table 640, in order to image the object 630 placed in the visual field 620 from various viewpoints as shown in Figure 6.

IMAGE ACOUISITION PROCESS

Bayer Process

In the preferred embodiment, the images are acquired using the Bayer Filter de-mosaicing technique which can be used since the raw outlet of the Bayer Filter cameras is available. Since each pixel is filtered to record only one of three colors, two thirds of the color data are missing in each pixel. In order to obtain a completely colored image, several algorithms based on de-mosaicing can be used to interpolate a set of the complete red, green and blue values for each point.

The bi-linear interpolation algorithm can be applied to the recovery of the full color image. These algorithms calculate the complete red, green and blue values for each pixel as follows:

1. Interpolation of the green pixel. The average of the upper, lower, left and right values of the pixel is assigned as the green value of the interpolated pixel.

2. Interpolation of the pixels red/blue:

2a. Interpolation of a red/blue pixel at a green position: the average of two values of adjacent pixels in the corresponding color is assigned to the interpolated pixel.

2b. The interpolation of a red/blue pixel in a blue/red position: the average of four values of adjacent diagonal pixels is assigned to the interpolated pixel.

Stereo image calibration

The system of stereo calibration images is obtained by placing a calibration object or pattern in the field of vision of the camera array and, if necessary, by adjusting the position and aperture of the cameras. The set of calibration images from a known calibration object is obtained. In a preferred embodiment the known calibration object consists of a chessboard pattern. With the up/down platform the calibration target is placed at two different distances so that two images of the calibration target are taken from each of the cameras. The parameters of the cameras are determined using a calibration process for a stereo system, which is described in detail below.

Radiometric image calibration

The set of radiometric calibration images is obtained by placing a calibration object or pattern within the field of vision of the camera array. The set of radiometric calibration images of a known gray level pattern (for example a target equilibrium test pattern) is obtained from each of the cameras. During the acquisition of the calibration images the light sources are commuted automatically.

Images of the 3-D calibration object

The 3-D calibration object, for example a triangular gauge block, is placed within the field of vision of the camera array, and the system of calibration object images is acquired when the light sources are commuted automatically.

Images of the object

The object is placed within the field of vision of the camera array, and the set of images of the object is acquired when the light sources are commuted automatically. The location of the object is within the boundary of the geometric calibration target.

STEREO CALIBRATION PROCESS

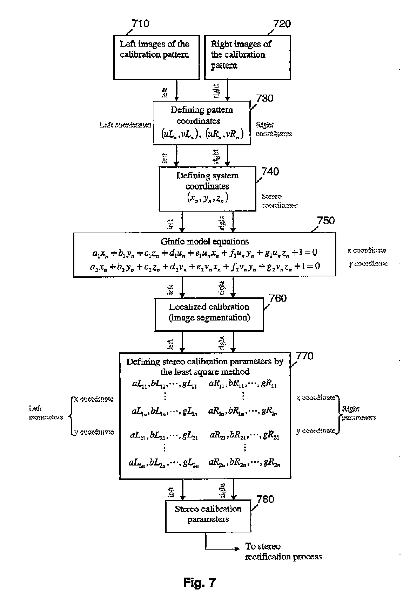

Figure 7 shows the stereo calibration process. Stereo calibration requires three sets of pairs of coordinates of the image in the scene. This set of coordinates of the scene is measured directly on the calibration pattern, the two corresponding sets of coordinates pairs of the image must be detected in the acquisition of the images from each of the cameras. In order to allow such detection, the pattern is equipped with the visually significant characteristics painted on them; these characteristics are called control points. The images on the left of the calibration pattern are input in step 710 and the images on the right of the calibration are input in step 720.

In order to develop the camera model that describes the projection of any 3-D point onto the plane of the image, we need to define the following coordinates of the system: *xyz*, the scene or world coordinates of the control points. These coordinates are measured directly on the geometric calibration pattern. The rank of *z* is defined in accordance with the depth of the object to be recovered. The coordinates of the corresponding left image of the control points are $u_L v_L$, and the coordinates of the corresponding right image are $u_R v_R$. These coordinates must be detected in the image. The position of the control points within the image is detected in step 730 and the coordinate system of the real world is input in step 740.

The positions of the control points in the acquired images are detected with an auto-detection algorithm. This self-detecting algorithm is based on the Harris corner detection method which calculates an operator of interest defined according to the autocorrelation of Gaussian smoothed images. This size of the convolution mask compensates between the location of the corners and the amount of excluded noise. The autocorrection can be defined as the sum of squares of the differences in image intensities:

$$\delta 1(\delta x, \delta y) = \sum_{ij \in patch} \left(I_1(i+\delta x, j+\delta y) - I_1(i,j)\right)^2 \qquad (1)$$

Whose Taylor analytical expansion is:

$$\delta 1(\delta x, \delta y) = (\delta x, \delta y) N \begin{pmatrix} \delta x \\ \delta y \end{pmatrix} \qquad (2)$$

Where:

$$N(x,y) = \begin{bmatrix} I_x^2 & I_x I_y \\ I_x I_y & I_y^2 \end{bmatrix} \qquad (3)$$

The two values proper to N are proportional to the main curvatures of N and their functions must have the property of rotational invariance. When the outline of the matrix is large there is an edge and when the determinant is large there is an edge or a corner.

A sign of the intensity of the comer:

$$\Phi(x,y) = |(x,y)| - kTrace^2 N(x,y) \qquad (4)$$

Where *K* is a constant value. The corner is defined by the maximum locations in the two dimensional quadratic portions adjusted to $\Phi(x, y)$, resulting in the accuracy of the sub-pixel,

$$ax^2 + by^2 + cxy + dx + ey + f = \Phi(x,y)) \qquad (5)$$

Using the nine pixels around (*x, y*), the result is 9 equations with 6 unknowns which can be solved with the least squares method.

Equations of the Gintic Model

The model of camera calibration defines ten initial parameters per each camera, these parameters are: $\omega$, the angle of rotation around the x-axis; $\varphi$, the angle of rotation around the y-axis; $k$ the angle of rotation around the z-axis; $\alpha_u$, the focal length of the u-axis; $\alpha_v$, the focal length of the v-axis; $k_1, k_2, k_3$, the parameters of the radial geometric distortion of the lens; $(u_p, v_p)$, the main point in the coordinates of the image. The relation between the world coordinate system and the reference coordinate system of the camera can be represented by the following equation:

$$\begin{pmatrix} P_n \\ q_n \\ s_n \end{pmatrix} = R(\omega, \varphi, k) \begin{pmatrix} x_n \\ y_n \\ Z_n \end{pmatrix} \tag{6}$$

We then are able to get its perspective projection. If it is assumed that a model of the pinhole camera and the plane of the image are at a distance f (focal length, converted to $\alpha_u$ and $\alpha_v$ to reflect the focal factors in the coordinates of the image) from the position of the pinhole, we have

$$\left(1 + k_1 r_n^2 + k_2 r_n^4\right) + k_3 r_n^6 \begin{pmatrix} u_n - u_p \\ v_n - v_p \end{pmatrix} = \frac{1}{s_n} \begin{pmatrix} a_u P_n \\ a_v q_n \end{pmatrix} \tag{7}$$

Where

$$r_n^2 = \left(u_u - u_p\right)^2 + \left(v_n - v_p\right)^2 \tag{7a}$$

In addition, simplifying the equation (7) we can rearrange at as equation (8) and equation (9) used in step 750:

$$a_1 x_n + b_1 y_n + c_1 z_n + d_1 u_n + e_1 u_n x_n + f_1 u_n y_n + g_1 u_n z_n + 1 = 0 \tag{8}$$

and

$$a_2 x_n + b_2 y_n + c_2 z_n + d_2 v_n + e_2 v_n x_n + f_2 v_n y_n + g_2 v_n z_n + 1 = 0 \tag{9}$$

This model uses 14 parameters ($a_{1L}$, $a_{2L}$... $g_{1L}$, $g_{2L}$) for the left camera and 14 parameters ($a_{1R}$, $a_{2R}$ ... $g_{1R}$, $g_{2R}$) for the right camera to describe the cartography of the 3-D world $x_n y_n z_n$ to the coordinates of the 2-D image $u_{nL}$ and $v_{nL}$ for the left camera and $u_{nR}$ and $v_{nR}$ for the right camera. These parameters are represented by box 780. The linear equation (8) and (9) used in step 750 can be solved and always leads to a stable result when at least seven points of the calibration target are available for each camera.

Localized calibration

The localized calibration 760 comes from the observation that the distortion of the lenses of the camera never is symmetrical and thus cannot be represented by the global parameters such as $k_1$, $k_2$ and $k_3$. The idea of the localized calibration is segmenting the total calibration area into overlapped sections, where we can obtain the parameters of the localized calibration for each section that best describes the behavior of the camera at that point. We obtain this by feeding into the equations (8) and (9) in step 750 the world and image coordinates of the points on the calibration target that corresponds to a particular section. When the section contains more than 7 points of the target, the localized parameters can be calculated applying the least squares solution in step 770 for the equations (8) and (9). It should be said that this calibration must be done for each camera of the system.

Stereo rectification process

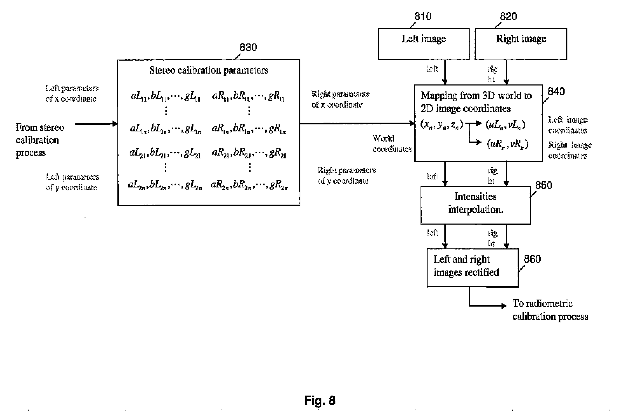

As shown in figure 8, when the stereo calibration parameters are obtained for each point of vision of the stereo rig, the stereo rectification process must be applied. The epipolar constraint is fulfilled by applying the calibration parameters for the stereo images.

The relation between the world coordinates and the coordinates of the image can be represented by the following equations, used in step 840:

$$u_n = \frac{\begin{bmatrix} a & b & c \end{bmatrix}\begin{bmatrix} x_n \\ y_n \\ z_n \end{bmatrix} + 1}{d + \begin{bmatrix} e & f & g \end{bmatrix}\begin{bmatrix} x_n \\ y_n \\ z_n \end{bmatrix}}$$

(10)

$$v_n = \frac{\begin{bmatrix} a & b & c \end{bmatrix}\begin{bmatrix} x_n \\ y_n \\ z_n \end{bmatrix} + 1}{d + \begin{bmatrix} e & f & g \end{bmatrix}\begin{bmatrix} x_n \\ y_n \\ z_n \end{bmatrix}}$$

(11)

Where $a$, $b$, $c$, $d$, $e$, $f$, $g$ are the parameters defined by the camera model, $x_n$, $y_n$, $z_n$ are the world coordinates and $u_n$, $v_n$ are the coordinates of the image for the x-axis, and the y-axis.

The equations (10) and (11) can be applied to the input of the stereo images 810 and 820 in step 840 using their respective calibration parameters 830: ($a_{1L}$, $a_{2L}$... $g_{1L}$ $g_{2L}$) for the left image and ($a_{1R}$, $a_{2R}$... $g_{1R}$, $g_{2R}$) for the right image. When the cartography 840 is defined between the world coordinates and the coordinates of the image by the stereo rig, an interpolation operation 850 is applied. The output 860 of the stereo rectification process are the rectified left and right stereo images.

RADIOMETRIC CALIBRATION PROCESS

The anisotropy of calibrated light and the relative orientation of the anisotropy with respect to each camera are required to recover the depth information of the objects of the scene considering an arbitrary or unknown surface reflectance. In order to, the radiometric calibration method defines an effective sensitivity function by a mixture of a small number of given positive semi-defined nuclei, kernels, ker($i$)

$$\mu_n(i) = \sum_{l=1}^{L} \alpha_i^l \ker(i - i_0^l)$$

(12)

Whose control points $i^l_0$ are the locations fixed in the image plane, $i$ denotes a pixel of the image and $\mu_n(i)$ is the effective sensitivity reconstructed for $n$ cameras.

The bi-cubic kernel $\ker(x, y) = \sum_{u=0}^{2} a_u x^u \cdot \sum_{v=0}^{2} b_v y^v$ is used in step 950 to recover the radiometric parameters 970 of each $\mu_n$. The equation (12) can be written as follows:

$$\mu_n(i) = a_0 b_0 + a_0 b_1 y + a_0 b_2 y^2 + a_1 b_0 x + a_1 b_1 xy + a_1 b_2 xy^2 + a_2 b_0 x^2 + a_2 b_1 x^2 y + a_2 b_2 x^2 y^2$$

(13)

Sampling

When the object of the radiometric calibration of known geometry is inserted in the scene and the images 910 and 920 of the object are acquired, and the points of the surface $x^S$, $x = 1.2...S$ are sampled in step 940 from the known parametric model of the calibration object.

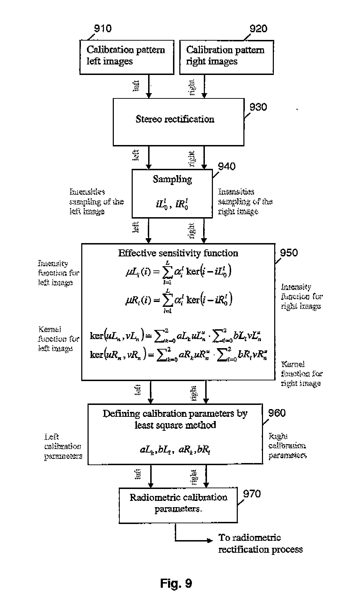

The 3-D points $x^S$ are projected to images via the geometric calibration parameters in step 930. The 3-D point $x^S$ provides one linear equation in a$^l_0$. In total, S equations are obtained for $n \times L$ unknowns ($L$ is not known for each of the cameras $n$). The system then is solved by the least squares method in step 960. This radiometric calibration process is shown in figure 9.

Radiometric rectification

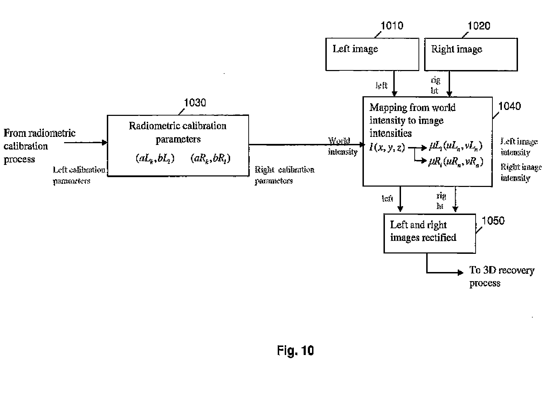

As shown in figure 10, once the system of radiometric calibration parameters 1030 is obtained for each point of vision 1010 and 1020 of the stereo rig, the stereo rectification processes are applied, the radiometric rectification processes are carried out, i.e. the radiometric calibration parameters are applied to the stereo images in such a way that the isotropic illumination on every epipolar line is satisfied.

The relation between the real intensities and the intensities of the image is represented by the following equation used in step 1040:

$$I(x, y, z) = \mu_\pi(u_\pi, v_\pi) \tag{14}$$

The equation (14) is applied in step 1040 for the stereo images using the respective left and right calibration parameters. The output of this process are radiometrically rectified left and right images 1050.

THREE-DIMENSIONAL RESTORATION PROCESS

The optical basis of the stereo recovery technique is based on the BRDF (Bidirectional Reflection Distribution Function), the reciprocity is for exploiting the symmetry of the surface reflectance. This optical property is obtained if the light sources and the position of the camera satisfy the condition that the radiance energy falls into the plane of the image, only depends on the surface form and is independent of the BRDF.

In order to satisfy the limitation of the reflectance reciprocity, it is necessary that the BRDF or the amount of incident and emitted energy must be equal for the selected position of the camera and the light source, which is represented as $\rho(\hat{V}_i, \hat{V}_e) = \rho(\hat{V}_e, \hat{V}_i)$.

One way to obtain these conditions is with a stereo assembly. For example, if a camera and the light source are placed at a known distance from each other (the base line), the left image is obtained with the camera in the left position and the light source in the right position. After that, the camera and the light source change places to obtain the right image. The positions for left and right cameras are defined by $O_l$, and $O_r$. A space point P has two direction vectors and these are defined by $V_l$ and $V_r$. Finally, the surface normal at that point is denoted by $ñ$.

Due to the reflectance reciprocity, it is known that $\rho(\hat{V}_r, \hat{V}_l) \rho(\hat{V}_l, \hat{V}_r)$, and without considering the drop by a unit of force of an isotropic light source, the matching constraint remains as:

$$\left(e_i\hat{V}_i - e_r\hat{V}_r\right)\cdot\hat{n} = 0 \tag{15}$$

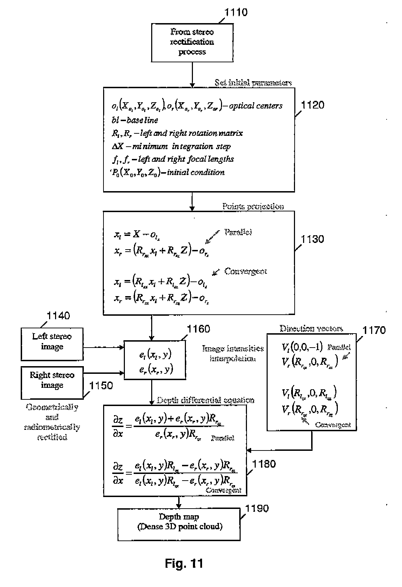

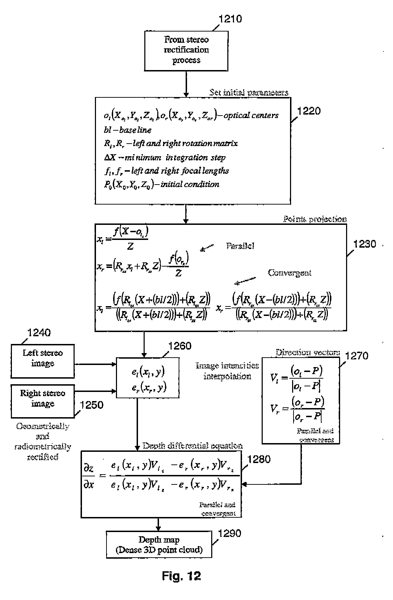

Following the block diagram in figures 11 and 12, the depth recovery process is represented considering two cases of geometry for the projection of space points. First the orthographic projection is explained and then the perspective projection is presented, in both cases the matching constraint for depth recovery is expressed as a partial differential equation.

Orthographic projection

The depth restoration process applies to the geometric and radiometrically reciprocal stereo images 1140 and 1150, i.e. the geometric epipolar constraint is satisfied, which means that the space of the search for the corresponding points is reduced from a 2-D array (a matrix) to a 1-D array 10 (a vector), in addition, both images of the stereoscopic pair have an isotropic light distribution.

In order to deduce the matching constraint for depth recovery, a geometric frame for a stereoscopic coplanar arrangement with the camera is established, i.e. the left and right optical axes are parallel. The initial parameters are defined in step 1120. In an orthographic projection, a surface point $P(X, Y, Z)$ is projected onto the plane of the image as $P(x, y)$ in step 1130. If the depth is considered a function of the image coordinates and the object to be recovered represents a first order curve of the continuous surface, then $Z = Z (x, y)$, and it can be expressed using the definition of the normal photometric stereopsis vector $n = (p, q, -1)$ where

$$p = \frac{\partial z}{\partial x} \quad \text{and} \quad q = \frac{\partial z}{\partial y}.$$

The reciprocity analysis of the BRDF is derived from the equation of matching constraint, and considering the geometric framework explained previously; it is possible to determine a coordinate reference system for the position of the left camera assuming an identity rotation matrix , therefore, the left direction vector $V_l$ (1170) is aligned with Z-axis, and if a minimum rotation angle is considered for the right camera (a rotation angle smaller than 3 degrees keeps a coplanar analysis), then the right direction vector $V_r$ (1170) is obtained from the right rotation matrix (1130).

Because of the epipolar constraint the partial derivative term is eliminated only, and finally, the matching constraint is simplified and the following differential equation is deduced:

$$\frac{\partial z}{\partial x} = \frac{e_l(x,y) + e_r(x_r, y) R_{r_{zz}}}{e_r(x_r, y) R_{r_{zx}}}$$

(16)

Where $e_l(x, y)$ and $e_r(x_r, y)$ 1160 are the reciprocal intensities of the image for each point of the image. This partial differential equation 1180 can be solved by a numerical integration method, restricted by an initial condition established in step 1120. Each epipolar line requires a known depth value for a point of the surface to integrate along the epipolar lines.

Now, if the geometry of the stereo camera is convergent, i.e. if the significant rotation angles relate to the left and right optical axes, it is necessary to introduce the rotation parameters for both stereo camera arrays. That is to say, a space point P will be project onto the plane of the left image at $p_l(R_{lx1} + R_{lx2}Z, y)$ and onto the plane of the right image at $p_r(R_{lx1} + R_{lx2}Z, y)$ in step 1130, both considering the principle of orthographic projection. In addition, the direction vectors 1170 for the left and right cameras can be obtained from the left and right rotation matrix. Finally, the variables are substituted in the general forced stereo matching constraint, and the following partial differential equation is arrived at:

$$\frac{\partial z}{\partial x} = \frac{e_l(x_l, y) R_{l_{zz}} - e_r(x_r, y) R_{r_{zz}}}{e_l(x_l, y) R_{l_{zx}} - e_r(x_r, y) R_{r_{zx}}}$$

(17)

Where $e_l(x, y)$ and $e_r(x_r, y)$ 1160 are the reciprocal intensities for each point of the image. In the same way, this partial differential equation 1180 can be solved for each epipolar line by a numerical integration method considering a known initial condition.

For the geometric analysis explained above it is necessary to explicitly know the extrinsic parameters 1110 for both cameras of the stereo array. A windowed approach is included to reduce point projection errors in order to obtain the left and right reciprocal intensities ($e_l$ and $e_r$). The result of the three-dimensional restoration process is a dense depth map 1190.

Perspective projection

In the same way as in the orthographic projection, the analysis presented here assumes that the stereo pair of images 1240 and 1250 is calibrated, radiometrically and geometrically in such a way that the intrinsic and extrinsic parameters 1210 and 1220 are known and the geometric epipolar constraint is fulfilled.

Considering a configuration of a coplanar stereo camera with a minimum rotation angle (less than 3 degrees keeps an analysis coplanar) for one of the cameras, and following the perspective of the point projection principle, it is known that a surface point is projected onto the plane of the left and right image in step 1230 by triangles similar to

$$p_l\left(\frac{fX}{Z}, y\right) \text{ and } p_r\left(\frac{f(XR_{r_{xx}} + ZR_{r_{xz}})}{Z}, y\right)$$

; where the focal length ($f$) is obtained from the previous geometrical calibration process as well as the rotation coefficients.

In the same way, if a convergent camera arrangement is considered, the rotation parameters will affect the point projection equations for both planes of the image, i.e. a point in space $P(X\,Y, Z)$ is projected in step 1230 onto the plane of the left image as $p_l\left(\frac{f(XR_{l_{xx}} + ZR_{l_{xz}})}{Z}, y\right)$, $p_l\left(\frac{f(XR_{l_{xx}} + ZR_{l_{xz}})}{Z}, y\right)$.

Due to the perspective projection, the direction vectors 1270 for both cameras are calculated from the spatial and image coordinates of the corresponding points. Now, considering the depth as a function of the image coordinates, in such a way that,

$\hat{n} = (\frac{\partial z}{\partial x}, \frac{\partial z}{\partial y}, -1)$, and replacing all parameters in the general matching constraint for depth recovery, the following partial differential equation 1280 is derived:

$$\frac{\partial z}{\partial x} = \frac{e_l(x_l, y)V_{l_z} - e_r(x_r, y)V_{r_z}}{e_l(x_l, y)V_{l_x} - e_r(x_r, y)V_{r_x}} \qquad (18)$$

Where $e_l(x, y)$ and $e_r(x, y)$ 1260 are the reciprocal intensities for each image point. This equation integrates the depth of the object to be recovered along the corresponding epipolar lines, and is solved by a numerical integration method assuming a known initial condition. The final result of this process of three-dimensional restoration is a dense depth map 1290.

CALIBRATION AND RECTIFICATION OF THE DEPTH MAP

After the three-dimensional restoration process it is necessary to apply a depth map calibration process to obtain accurate depth maps. The 3-D calibration process is carried out by fitting the measurements of the depth map 1340 to a set of previously known measurements 1330 of a very precise 3-D calibration object such a triangular gage block. The fitting of the depth map is accomplished by computing the depth map calibration model parameters by minimizing the squared distance between the measurements of the 3-D calibration object and the corresponding measurements of the depth map. The parameters of the 3-D calibration model 1360 include a scalar factor $\alpha$ and a compensation offset $\beta$. The equation (19) used in step 1350 defines the depth map calibration relation.

$$z_{depth\ map}^{calib} = \alpha z_{depth\ map} + \beta \qquad (19)$$

The set of measurements 1330 of a 3-D calibration object is selected and obtained manually, and the 3-D calibration process fits those measurements to a plane in the scene-coordinate system. This plane is used for calibrating the depth map, since in the image-coordinate system, the image points corresponding to the scene-coordinate points of the 3-D calibration object also form a plane.

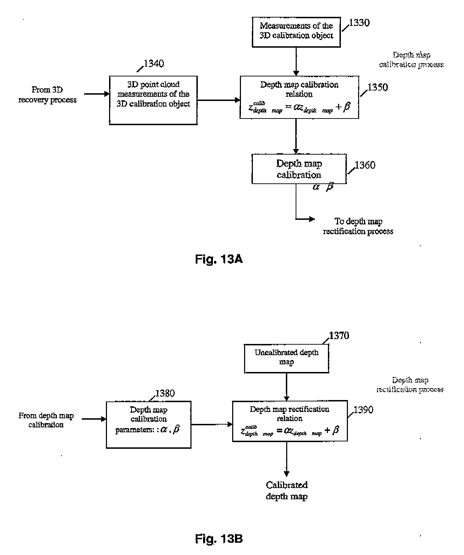

To find the calibration parameters it is necessary to use a linear least square method and to diminish the square error in z (the axis perpendicular to the image plane). We fit the plane $ax + by - z + d = 0$ to the location of scene coordinates. Using the parameters of the computed plane ($a$, $b$, $d$), the substitution for $z_{depth\ map}^{calib}$ can be accomplished using the equation (19) in step 1350 and solving (by the linear least square method) the resulting problem for all known data points to obtain the parameters 1360, $\alpha$ and $\beta$. Then the rectification process 1390 is accomplished applying the 3-D calibration parameters 1380 ($\alpha$ and $\beta$) to the depth map 1370 recovered of any object imaged. The calibration and rectification processes are shown in figures 13A and 13B.

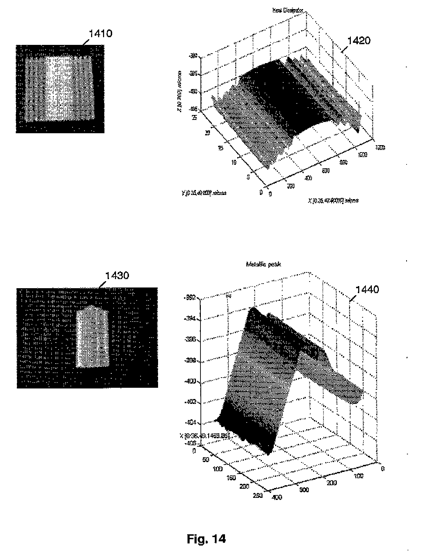

Figure 14 shows two depth map graphs 1420 and 1440 at the micron level scale. The graphs illustrate the models of two metallic pieces obtained with the present invention, a heat dissipater a 1410 and a frame 1430.

The subject invention is a method and an apparatus for radiometric and stereo calibration and a three-dimensional stereo technique for obtaining accurate dense maps without knowing the surface reflectance beforehand. Unlike the state of the art, the system only uses two images of objects for the three-dimensional modeling of objects without considering their reflective distribution. The system takes advantage of the reflectance symmetry of surfaces, i.e. the system can manipulate untextured and reflecting surfaces. The system also has interior light sources to align the optical axis with the light beam. The system allows the automatic communication of the stereo light sources to satisfy the reciprocity property of the images.

In an alternative embodiment of the subject invention different wavelengths of light (color, IR or UV light) could be used to improve the surface contrast for a better quality of the recovered 3-D information. Also, different wavelengths can be used in combination (imaging with different colors, infrared or UV) to recover better 3-D surfaces using differential methods. The use of polarized light and/or polarizers in the camera heads for 3-D recovery using single-time image acquisition is also possible in alternative embodiments, or to recover better 3-D estimates using the reflection of polarized light equations.

Although the invention has been described by way of preferred embodiments, it is understood that several other adaptations and modifications are possible within the scope of the invention. The purpose of the attached claims is therefore to cover all variations and modifications that fall under the scope of the invention.

**Claims**

1. An automated system for the three-dimensional recovery of an object placed within the field of the vision of a plurality of cameras, comprising:

   a lighting and image acquisition apparatus configured to acquire reciprocal stereo images of said objects without physically moving this plurality of cameras;
   a computational device programmed to recover depth data of said object from said reciprocal stereo images, **characterized by** the fact that said depth data can be recovered irrespective of the reflectance properties of said object;
   **characterized by** the fact that said computational device is further programmed to carry out automatic calibration of said system based on a plurality of stereo calibration images.

2. The system of Claim 1, **characterized by** the fact that this plurality of stereo calibration images comprise geometric images, radiometric patterns and images acquired from three-dimensional calibration objects.

3. The system of Claim 1, **characterized by** the fact that said image acquisition device comprises a camera array.

4. The system of Claim 1, **characterized by** the fact that said automatic calibration models with stereo and radiometric characteristics of this plurality of cameras, and a plurality of stereo and radiometric calibration parameters are determined by geometric and radiometric distortion.

5. The system of Claim 1, **characterized by** the fact that said automatic calibration rectifies the stereo and radiometric characteristics of this plurality of cameras as the geometric and radiometric distortion of the stereo images is eliminated.

6. The system of Claim 1, **characterized by** the fact that said computational device uses a model to describe the cartographic relation between the spatial coordinates and the image coordinates using linear equations.

7. The system of Claim 1, **characterized by** the fact that said computational device characterizes a plurality of cameras by feeding a set of linear equations the spatial coordinates and image coordinates of a calibration pattern.

8. The system of Claim 1, **characterized by** the fact that said computational device characterizes the behavior of the light source by feeding a linear equation the images intensities of a calibration pattern.

9. The system of Claim 1, **characterized by** the fact that this illumination and image acquisition apparatus comprises a plurality of cameras assembled with a plurality of light sources.

10. The system of Claim 1, **characterized by** the fact that this illumination and image acquisition apparatus includes an assembly for placing one or more cameras and stereo arrays of light sources for acquiring objects from a variety of points of view.

11. The system according to Claim 1 includes also:

   a light source commutation apparatus used to satisfy the reciprocity property of image intensities.

12. The system of Claim 1, **characterized by** the fact that the light sources are assigned outside the optical center positions such that different reciprocity ratios of image intensities are obtained.

13. A method for the three-dimensional recovery of an object placed within the field of vision of a plurality of cameras, including the steps of:

   Illuminating an object and acquiring reciprocal stereo images without physically moving this plurality of cameras;
   recovering depth data of this object from the reciprocal stereo images, where these depth data can be recovered without taking into account the reflectance properties of this object;
Automatically calibrating this system on the basis of a plurality of stereo calibration images.

14. The method of Claim 13, **characterized by** the fact that this plurality of stereo calibration images include geometric images, radiometric patterns and images taken of three-dimensional calibration objects.

15. The method of Claim 13, **characterized by** the fact that this illumination and acquisition step uses a camera array.

16. The method of Claim 13, **characterized by** the fact that this calibration step automatically models the stereo and radiometric characteristics of this plurality of cameras, and that a plurality of stereo and radiometric calibration parameters is determined by geometric and radiometric distortion.

17. The method of Claim 13, **characterized by** the fact that this calibration step automatically rectifies the stereo and radiometric characteristics of this plurality of cameras in such a way that the geometric and radiometric distortion of stereo images is eliminated.

18. The method of Claim 13, **characterized by** the fact that said recovery step uses a model to describe the cartography relation between the spatial coordinates and the image coordinates using linear equations.

19. The method of Claim 13, **characterized by** the fact that said calibration step automatically characterizes a plurality of cameras by feeding a set of linear equations the spatial coordinates and image coordinates of a calibration pattern.

20. The method of Claim 13, **characterized by** the fact that this calibration step automatically characterizes the behavior of the light sources by feeding a linear equation with image intensities of a calibration pattern.

21. The method of Claim 13, **characterized by** the fact that this illumination and acquisition step uses a plurality of cameras assembled with a plurality of light sources.

22. The method of Claim 13, **characterized by** the fact that this illumination and acquisition step uses an assembly placing one or more cameras and light source stereo arrays in order to capture the object from various points of view.

23. The method of Claim 13, **characterized by** the fact that this illumination and acquisition step uses a light source commutation apparatus to ensure the reciprocity properties of image intensities.

24. The method of Claim 13, **characterized by** the fact that this illumination and acquisition step uses light sources placed outside the optical center positions so as to obtain different reciprocity ratios of image intensities.

left camera

right camera

110

120

left beam-splitter

130 140

right beam-splitter

170

180

160

150

left light source

right light source

left optical axis

right optical axis

190

object for
depth
recovery

**Fig. 1**

left camera

210

right light source

220

230

object for
depth recovery

1. Camera on the left position
and light source on the right.
Left stereo image is acquired

240

left light source

right camera

250

230

object for
depth
recovery

2. Camera on the right
position and light source
on the left. Right stereo
image is acquired

Fig. 2

Camera head with internal
light source

Image sensor

330

320

340      350

310

Beam splitter

Optical axe

Light source          Lens

Diaphragm for
depth of field control

360

370

Imaging optics

Camera field of view

380

Fig. 3A

Fig. 3B

**Fig. 4**

**Fig. 5**

Fig. 7

**Fig. 8**

910

920

| Calibration pattern left images | Calibration pattern right images |
|---|---|

930

Stereo rectification

940

Sampling

$iL_0^l$, $iR_0^l$

Intensities sampling of the left image

Intensities sampling of the right image

Effective sensitivity function    950

Intensity function for left image

$$\mu L_i(i) = \sum_{l=1}^{L} \alpha_i^l \ker\!\left(i - iL_0^l\right)$$

$$\mu R_i(i) = \sum_{l=1}^{L} \alpha_i^l \ker\!\left(i - iR_0^l\right)$$

Intensity function for right image

Kernel function for left image

$$\ker\!\left(uL_n, vL_n\right) = \sum_{k=0}^{2} aL_k uL_n^u \cdot \sum_{l=0}^{2} bL_l vL_n^u$$

$$\ker\!\left(uR_n, vR_n\right) = \sum_{k=0}^{2} aR_k uR_n^u \cdot \sum_{l=0}^{2} bR_l vR_n^u$$

Kernel function for right image

Defining calibration parameters by least square method    960

Left calibration parameters

$$aL_k, bL_l,\; aR_k, bR_l$$

Right calibration parameters

Radiometric calibration parameters.    970

To radiometric rectification process

**Fig. 9**

25

1010

1020

Left image

Right image

left

rig
ht

1030

Radiometric calibration
parameters

$(aL_k, bL_i)$ $(aR_k, bR_i)$

From radiometric
calibration
process

Left calibration
parameters

Right calibration
parameters

World
intensity

Mapping from world
intensity to image
intensities

$I(x, y, z) \longrightarrow \mu L_i(uL_n, vL_n)$
$\longrightarrow \mu R_i(uR_n, vR_n)$

1040

Left image
intensity

Right image
intensity

left

rig
ht

Left and right
images rectified

1050

To 3D recovery
process

Fig. 10

**1110** From stereo rectification process

Set initial parameters

**1120**
$o_l(X_{o_l}, Y_{o_l}, Z_{o_l}), o_r(X_{o_r}, Y_{o_r}, Z_{or}) - optical\ centers$
$bl - base\ line$
$R_l, R_r - left\ and\ right\ rotation\ matrix$
$\Delta X - minimum\ integration\ step$
$f_l, f_r - left\ and\ right\ focal\ lengths$
$'P_0(X_0, Y_0, Z_0) - initial\ condition$

Points projection

**1130**
$x_l = X - o_{l_x}$ ↗ Parallel
$x_r = (R_{r_{xx}} x_l + R_{r_{xz}} Z) - o_{r_x}$

$x_l = (R_{l_{xx}} x_l + R_{l_{xz}} Z) - o_{l_x}$ ↗ Convergent
$x_r = (R_{r_{xx}} x_l + R_{r_{xz}} Z) - o_{r_x}$

**1140** Left stereo image

**1150** Right stereo image

Geometrically and radiometrically rectified

**1160**
$e_l(x_l, y)$
$e_r(x_r, y)$

Image intensities interpolation

Direction vectors **1170**
$V_l(0,0,-1)$ Parallel
$V_r(R_{r_{zx}}, 0, R_{r_{zz}})$ ↗

$V_l(R_{l_{zx}}, 0, R_{l_{zz}})$
$V_r(R_{r_{zx}}, 0, R_{r_{zz}})$ ↙ Convergent

Depth differential equation

**1180**
$$\frac{\partial z}{\partial x} = \frac{e_l(x_l, y) + e_r(x_r, y) R_{r_{zx}}}{e_r(x_r, y) R_{r_{zz}}}$$ Parallel

$$\frac{\partial z}{\partial x} = \frac{e_l(x_l, y) R_{l_{zx}} - e_r(x_r, y) R_{r_{zx}}}{e_l(x_l, y) R_{l_{zz}} - e_r(x_r, y) R_{r_{zz}}}$$ Convergent

**1190** Depth map (Dense 3D point cloud)

**Fig. 11**

1210

From stereo
rectification
process

Set initial parameters

1220

$o_l(X_{o_l}, Y_{o_l}, Z_{o_l}), o_r(X_{o_r}, Y_{o_r}, Z_{o_r}) - optical\ centers$

$bl - base\ line$

$R_l, R_r - left\ and\ right\ rotation\ matrix$

$\Delta X - mi\ nimum\ integration\ step$

$f_l, f_r - left\ and\ right\ focal\ lengths$

$P_0(X_0, Y_0, Z_0) - initial\ condition$

Points projection

1230

$x_l = \dfrac{f(X - o_{l_x})}{Z}$ ← Parallel

$x_r = (R_{rx} x_l + R_{rz} Z) \dfrac{f(o_{l_x})}{Z}$ ← Convergent

$x_l = \dfrac{\left(f\left(R_{lx}(X + (bl/2))\right) + (R_{lz} Z)\right)}{\left((R_{lz}(X + (bl/2))) + (R_{lz} Z)\right)} \qquad x_r = \dfrac{\left(f\left(R_{rx}(X - (bl/2))\right) + (R_{rz} Z)\right)}{\left((R_{rz}(X - (bl/2))) + (R_{rz} Z)\right)}$

1240

Left stereo
image

Right stereo
image

1250

Geometrically
and
radiometrically
rectified

1260

$e_l(x_l, y)$
$e_r(x_r, y)$

Image intensities
interpolation

Direction vectors 1270

$V_l = \dfrac{(o_l - P)}{|o_l - P|}$

$V_r = \dfrac{(o_r - P)}{|o_r - P|}$

Parallel and
convergent

Depth differential equation

$\dfrac{\partial z}{\partial x} = \dfrac{e_l(x_l, y)V_{l_x} - e_r(x_r, y)V_{r_x}}{e_l(x_l, y)V_{l_z} - e_r(x_r, y)V_{r_z}}$

1280

Parallel and
convergent

Depth map
(Dense 3D point cloud)

1290

**Fig. 12**

28

**Fig. 13A**

**Fig. 13B**

Fig. 14

**EP 2 104 365 A1**

## INTERNATIONAL SEARCH REPORT

| International application No. |
| --- |
| PCT/ MX 2007/000144 |

### A. CLASSIFICATION OF SUBJECT MATTER

see extra sheet

According to International Patent Classification (IPC) or to both national classification and IPC

### B. FIELDS SEARCHED

Minimum documentation searched (classification system followed by classification symbols)
H04N13/00 , G06T11/00

Documentation searched other than minimum documentation to the extent that such documents are included in the fields searched

Electronic data base consulted during the international search (name of data base and, where practicable, search terms used)

CIBEPAT,EPODOC,WPI

### C. DOCUMENTS CONSIDERED TO BE RELEVANT

| Category* | Citation of document, with indication, where appropriate, of the relevant passages | Relevant to claim No. |
| --- | --- | --- |
| X | WO 0027131 A2 (UNIV GLASGOW ; JIN JOSEPH ZHENGPING ; NIBLETT TIMOTHY BRYAN) 11.05.2000, Page 1, lines 3-7; Page 3, lines 25-32; Pages 4-19; Page 20, lines 1-20; Page 22, lines 8-31; Pages 23,24; Page 25, line 1; Page 30, line 24-30; Pages 31,32; Page 33, lines 1-3; Page 43, line 8-32; page 44, lines 1-4; Page 46, lines 15-24; page 47, lines 1-5. *Todas las claims. the wholes los images. | 1-4,6-8,13-16,18-20 |
| Y | | 5,17 |
| Y | EP 1235439 A2 (SHARP KK) 28.08.2002, Paragraphs 1,27-57,75. *Todas las claims. the wholes los images. | 5,17 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
| --- | --- |
| 16 April 2008       (16.04.2008) | (23/04/2008) |
| Name and mailing address of the ISA/ O.E.P.M. Paseo de la Castellana, 75 28071 Madrid, España. Facsimile No.   34 91 3495304 | Authorized officer Mª C. González Vasserot Telephone No. +34 91 3493087 |

Form PCT/ISA/210 (second sheet) (April 2007)

31

INTERNATIONAL SEARCH REPORT

| International application No. |
|---|
| PCT/MX 2007/000144 |

| C (continuation). | DOCUMENTS CONSIDERED TO BE RELEVANT | |
|---|---|---|
| Category* | Citation of documents, with indication, where appropriate, of the relevant passages | Relevant to claim No. |
| X | WO 0213140 A2 (KONINKL PHILIPS ELECTRONICS NV) 14.02.2002, Pages 1, lines 2-4,16-29; Pages 2-4; Page 5, lines 1,2,18-24,28-30; Page 6, lines 23-26; Page 9, lines 27-31; *Todas las claims. the wholes los images. | 1-3,6-8,13-15,18-20 |
| X | EP 1089573 A2 (SHARP KK) 04.04.2001, Paragraphs 1-3, 24-46, 68, 94, 148. *Todas las claims. the wholes los images. | 1-3,6-8,13-15,18-20 |

Form PCT/ISA/210 (continuation of second sheet) (April 2007)

| INTERNATIONAL SEARCH REPORT | International application No. |
|---|---|
|  | PCT/ MX 2007/000144 |

CLASSIFICATION OF SUBJECT MATTER

*H04N 13/00* (2006.01)
*G06T 11/00* (2006.01)

Form PCT/ISA/210 (extra sheeet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TSAI, R. Y.** An Efficient and Accurate Camera Calibration Technique for 3-D Machine Vision. *Proceedings of the IEEE Conference on Computer Vision and Pattern Recognitions (CVPR),* 1986, 364-374
- **LENZ, R.K. ; TSAI, R. Y.** Techniques for Calibration of the Scale Factor and Image Center for High Accuracy 3-D Machine Vision Metrology. *IEEE Transactions in pattern analysis and artificial intelligence,* September 1988, vol. 10 (5), 713-720
- **ABDEL, AZIS, Y. I. ; KARARA, H. M.** Direct linear transformation into object space coordinates in close range photogrammetry. *Proceedings of the Symposia on Close-Range Photogrammetry,* 1971, 1-18
- Projective Geometry in Perspective. **HARALICK, R. ; SHAPIRO, L.** Computer and Robot Vision. Addison Wesley, 1993, vol. 11, 43-124
- Comparative Study of Algorithms with Application to the Navigation of Spaceships. **POELZLEITNER, W. ; ULM, M.** SPIE Proceedings, volume 2350, Videometrics III. Sabry F. Haking Publishers, October 1994, vol. 2350, 187-196

- **BROWN, D.C.** Calibration of close-range cameras. *Photogrammetric Engineering,* 1971, vol. 37 (8), 855-866
- **JIAN, X. ; MALCOLM; A. ; ZFIONGPING, F.** Camer Calibration with Micron Level Accuracy. *SIMTech Techical Report (AT/01/037/PS) Singapore,* 2001
- **JANKO, Z. ; DRBOHLAV, 0. ; SARA, R.** Radiometric Calibration of a Helmholtz Stereo Rig. *Computer Vision and Patterns Recognition,* 27 June 2004, vol. 1, 166-171
- **MAGDA, S. ; KRIEGMAN, D. ; ZICKLER, T. ; BELHUMEUR, P.** Beyond Lambert: Reconstructing surfaces with arbitrary BRDFs. *Proceedings of the International Conference on Computer Vision,* 2001, 391-399
- **ZICKLER, T. ; BELHUMEUR, P. ; KRIEGMAN, D.** Helmoholtz stereopsis: Exploiting Reciprocity for Surface Reconstruction. *Proceedings of the 7th European Conference on Computer Vision (ECCV),* May 2002, vol. 3, 869-884
- **ZICKLER, T. ; HO, J. ; KRIEGMAN, D., J. ; BELHUMEUR, P.** Binocular Helmholtz Stereopsis. *Proceedings of the International Conference on Computer Vision (ICCV),* 2003, 1411-1417